# EUROPEAN PATENT APPLICATION

(11) **EP 1 690 589 A1**
(43) Date of publication of application: **16.08.2006**
(21) Application number: 05002790.3
(22) Date of filing: 10.02.2005
(51) Int. Cl.: B01D 53/94, F01N 3/28, F01N 3/20

(54) **Active catalytic converter**

(71) Applicant: Lee, Tzong-Yih, Taipei County 248, Taiwan (CN)
(72) Inventor: Lee, Tzong-Yih, Taipei County 248, Taiwan (CN)
(74) Representative: Becker Kurig Straus

(57) **Abstract**

The present invention provides an active catalytic converter, primarily structured to include catalyst carriers, insulated support plates, a heat insulator, and a lead wire, wherein the catalyst carriers are auto heating electrothermal catalyst carriers. The insulating support plates are configured as laminates to space apart a plurality of the catalyst carriers. The insulating support plates further support and secure the catalyst carriers, and, moreover, enable harmful gases to circulate the catalyst carriers and undergo a catalytic reaction. The heat insulator is configured as an exterior member, thereby securely encasing the catalyst carriers and the insulated support plates. The lead wire connects the catalyst carriers to a power supply. When power is switched on, the electrothermal catalyst carriers are directly and rapidly heated to a catalytic temperature, thereby eliminating the need for a preheating time. Moreover, the present invention timely provides air purification effectiveness regardless of the temperature of the air to be purified.

## Description

### BACKGROUND OF THE INVENTION

### a) Field of the Invention

The present invention relates to an active catalytic converter, and more particularly to an active catalytic converter primarily using a method of self catalysis to achieve a catalysis temperature, so as to reduce preheating time and timely purify air flowing through.

### b) Description of the Prior Art

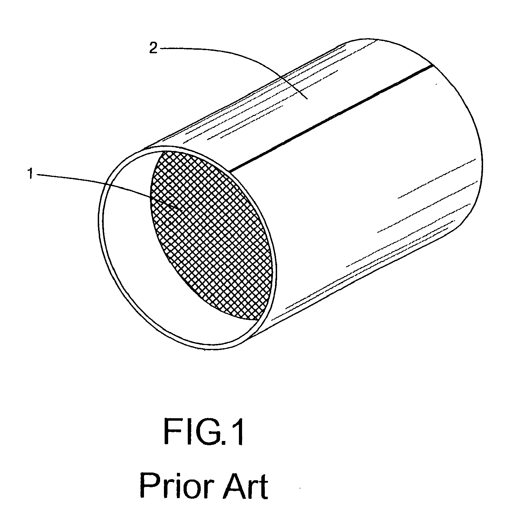

A catalytic converter is generally installed in an exhaust device of a conventional air purification equipment, in order to allow waste gases such as CO, or HC after burning to be in contact with a catalyst in the converter and trigger a chemical reaction to be converted to lower polluting or harmless gases such as CO₂ or H20, and then expelled into atmosphere, thereby achieving the effect of purification. However, most of the conventional catalytic converters (as shown in FIG. 1) which are formed by catalytic carriers 1 and heat insulator 2, should be heated by purified air after activating, and can provide function of air purification only after achieving a catalysis temperature, and thus cannot be directly employed to purification of cold air. Therefore, for an air pollutant such as a waste gas exhausted by an automobile or a locomotive, or an indoor dirty air, exhausted by a waste gas that needs to be reduced in a short time, there is still a certain amount of time during which the catalysts will not reach a critical temperature, meaning that air cannot be purified within this preheating time, and air is still polluted. Accordingly, a conventional catalytic converter does not help enough in purifying air, and cannot satisfy needs, either.

### SUMMARY OF THE INVENTION

The present invention is to provide an active catalytic converter, which primarily combines a heater and a catalytic converter into an electrothermal catalytic converter, wherein electrothermal catalytic carriers are directly or indirectly heated immediately after activating to reach a catalysis temperature and can timely provide function of air purification independent of a temperature of purified air.

The object of the present invention is to provide an active catalytic converter which can be employed to an automobile, a locomotive, an air cleaner, an air blower, a heater, and other air purification equipments. The active catalytic converter comprises primarily catalytic carriers, an isolation supporter, a heat insulator, and a conducting wire, wherein the catalytic carriers consist of self heating elements as the carriers, upon which coated and covered with catalysts and accelerants, thereby forming the electrothermal catalytic carriers. The isolation supporter includes a plurality of layers of plates for isolating a certain amount of catalytic carriers, in order to fix and support the catalytic carriers. In addition to allowing a flowing space for preventing from overlapping and sticking of the catalytic carriers, the isolation supporter can also assure that hazardous gases to be exhausted can all flow through the catalytic carriers to perform a catalysis reaction. The heat insulator is located outside of the catalytic carriers and the isolation supporter, for holding the catalytic carriers and the isolation supporter, thereby maintaining a temperature of the catalytic carriers and serving as an exterior heat insulating and protecting. The conducting wire is connected with the catalytic carriers and a power supply. The electrothermal catalytic carriers are in conduction with the conducting wire and can be heated up immediately upon activating the power supply, such that when hazardous gases are generated in a waste gas, the electrothermal catalytic carriers have been already heated directly and starting to triggering reactions, thereby timely catalyzing hazardous gases such as CO, HC and Nox in a waste gas, and converting into harmless CO₂, H₂O and N₂, before expelling into atmosphere, and thus achieving the effect of purification.

Accordingly, the present invention also provides an active catalytic converter comprising primarily catalytic carriers, heating coils, an isolation supporter, a heat insulator, and a conducting wire, wherein the catalytic carriers are conventional carriers coated with catalysts and accelerants, the heating coils are wrapped around a top end of the catalytic carriers, and the isolation supporter includes curly plates to separate the catalytic carriers and the heating coils for fixing and supporting, so as to allow hazardous gases to flow through the catalytic carriers for performing a catalysis reaction. The heat insulator is located outside to hold the catalytic carriers, the heating coils, and the isolation supporter, so as to maintain a certain temperature to the catalytic carriers, and serve as an exterior heat insulating. The conducting wire is connected with the heating coils and a power supply, respectively. At the same time of activating the power supply, the heating coils are quickly heated up with the conduction by the conducting wire, in order to timely heat up the catalytic carriers to a catalysis temperature. Therefore, when hazardous gases are generated in a waste gas, the catalytic carriers have been already heated indirectly and starting to triggering reactions, thereby timely catalyzing hazardous gases, and thus achieving the effect of purification.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a schematic view of a conventional catalytic converter.
FIG. 2 shows a schematic view of the present invention.
FIG. 3 shows a cross sectional view of FIG.2 of the present invention.
FIG. 4 shows a schematic view of another implementation of the present invention.
FIG. 5 shows a cross sectional view of FIG. 4 of the another implementation of the present invention.

### DETAILED DESCRIPTION OF THE PREFERRED EMBODIMENTS

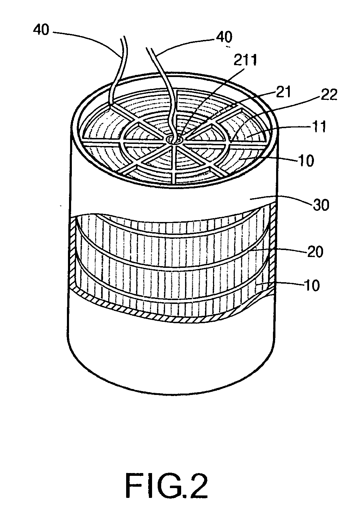

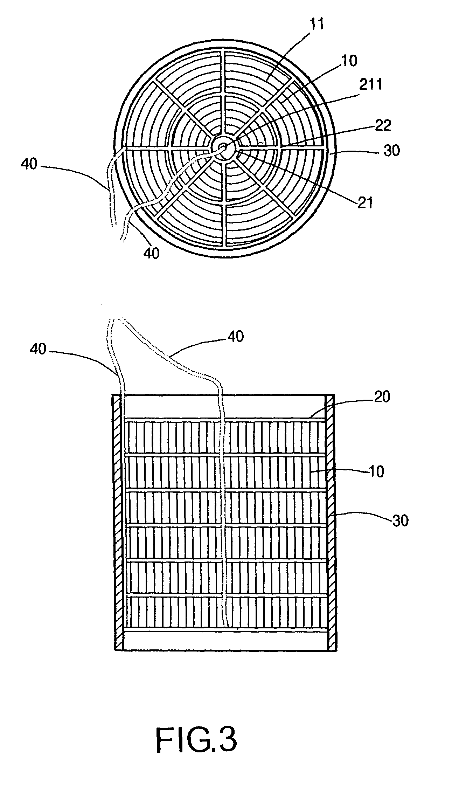

Referring to FIG. 2 and FIG. 3, it shows a schematic view of a cross sectional view of the present invention comprising primarily catalytic carriers 10, an isolation supporter 20, a heat insulator 30, and a conducting wire 40. The catalytic carriers 10 consist of self heating elements as the carriers, upon which coated and covered with catalysts and accelerants, thereby forming the electrothermal catalytic carriers 10. The catalytic carriers are sheets the can be entwined, in which a plurality of air passageway 11 is formed for allowing air to flow through. The isolation supporter 20 includes a support stand 21, with a through hole 211, allowing for the conducting wire 40 to go through, located at a center of the support stand 21, A plurality of layers of plates 22 are extended outside from the through hole 211 for fixing and supporting the catalytic carriers 10, in order to isolate a certain amount of the catalytic carriers 10, so as to prevent from overlapping or sticking, and to provide a better flow condition for gases and a larger contact area, with the design of multi layers, and to assure that hazardous gases to be exhausted can all flow through and be fully in contact with the catalytic carriers 10 to perform a catalysis reaction, thereby maintaining a best air purification function. The heat insulator 30 is a cylinder that is located outside of the catalytic carriers 10 and the isolation supporter 30, to hold the catalytic carriers 10 and the isolation supporter 30, thereby maintaining a temperature of the catalytic carriers 10, and serving as an exterior heat insulating. The conducting wire 40 is connected with the catalytic carriers 10 and a power supply. At the same time of activating the power supply, the electrothermal catalytic carriers 10 can be immediately in conduction by the conducting wire 40, and be directly heated up.

After initiation and running of an engine or machine, and at the time when starting to exhaust hazardous gases generated within the engine or machine, the electrothermal catalytic carriers 10 have been starting to work and function to catalyze hazardous gases such as CO, HC and Nox, to convert into harmless CO₂, H₂O and N₂ before expelling into atmosphere, thereby achieving the effect of purification.

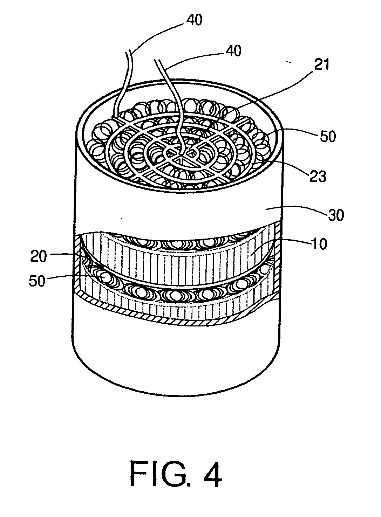

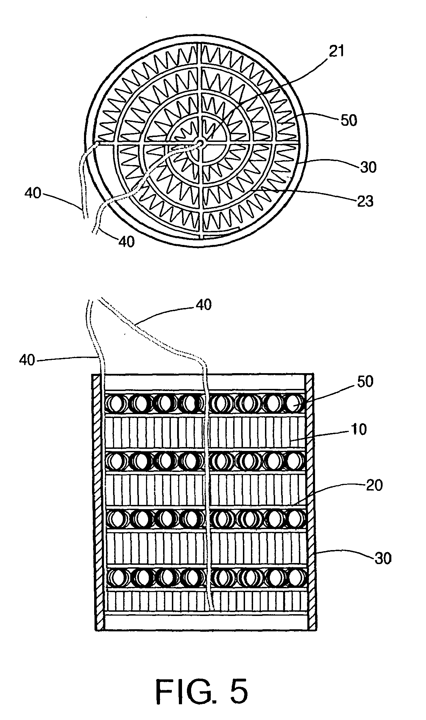

Referring to FIG. 4 and FIG. 5, it shows a schematic view and a cross sectional view of another implementation of the prevent invention, comprising primarily catalytic carriers 10, an isolation supporter 20, a heat insulator 30, a conducting wire 40, and heating coils 50, wherein the catalytic carriers 10 are conventional carriers with catalysts and accelerants, upon which covered with the heating coils 50. The heating coils 50 are installed at a top end of the catalytic carriers 10 in a curly method, so as to quickly transmit heat to the catalytic carriers 10. The isolation supporter 20 includes a support stand 21 and curly plates 23, wherein the curly plates 23 are used to separate a certain amount of the catalytic carriers 10 with the heating coils 50, and the curly plates 23 are higher than the sum of the heights of the catalytic carriers 10 and the heating coils 50, in order to serve as fixing and supporting, so as to prevent the catalytic carriers 10 from overlapping and sticking, and to increase contact area, so as to allow hazardous to fully flow through and be in contact with the catalytic carriers 10 to perform a catalysis reaction. The heat insulator 30 is a cylinder located outside for holding the catalytic carriers 10, the heating coils 50, and the isolation supporter 20, so as to maintain a certain temperature of the catalytic carriers 10, and to serve as an exterior heat insulating. The conducting wire 40 is connected with the heating coils 50 and a power supply, respectively. At the same time of activating the power supply, the heating coils 50 are also quickly heated up by the conduction of the conducting wire 50, and the catalytic carriers 10 can timely absorb heat and be heated up to a catalysis temperature. Therefore, when hazardous gases are generated from a waste gas, the catalytic carriers 10 have been heated up indirectly to begin functioning, and can timely catalyze the hazardous gases, thereby achieving the effect of purification.

Furthermore, the design of a plurality of layers of plates and electrothermal catalytic carriers of the present invention can be conveniently applied and adapted to requirements of all kinds of different sizes of catalytic converters, and can even keep a certain working temperature after shutting down a power supply, thereby purifying waste gases last generated.

## Claims

1. An active catalytic converter comprising:
primarily catalytic carriers, an isolation supporter, a heat insulator, and
a conducting wire, wherein the catalytic carriers consist of self heating elements as the carriers, upon which coated and covered with catalysts and accelerants, thereby forming the electronthermal catalytic carriers; the isolation supporter including a support stand with a plurality of layers of plates extended outward from a center of the support stand, for isolating a certain amount of the catalytic carriers; the heat insulator being a cylinder surrounding the outside of the catalytic carriers and the isolation supporter, for holding the catalytic carriers and the isolation supporter; the conducting wire connecting with the catalytic carriers and a power supply; the eletrothermal catalytic carriers being conducted and directly heated up to a catalysis temperature by the conducting wire, at the same of activating the power supply.

2. The active catalytic converter according to claim 1, wherein the electrothermal catalytic carriers are sheets with a shape of bands.

3. The active catalytic converter according to claim 1, wherein the electrothermal catalytic carriers are sheets with a shape of waves.

4. The active catalytic converter according to claim 1, wherein a hrough hole is located at a center of the support stand, allowing for the conducting wire to go through.

5. An active catalytic converter comprising:
primarily catalytic carriers, heating coils, an isolation supporter, a heat insulator, and a conducting wire, wherein the catalytic carriers are arriers coated with catalysts and accelerants, and in a curly shape and
entwining outward from a center of support stand of the isolation supporter; the heating coils being wrapped around a top end of the catalytic carriers, entwining outward from a center of the support stand along with the catalytic carriers; the isolation supporter including a support stand and curly plates, with curly plates surrounding the catalytic carriers and the heating coils, and entwining outward from a center of the support stand; the heat insulator being a cylinder for holding the catalytic carriers, the heating coils, and the isolation supporter; the conducting wire being connected with the heating coils and a power supply, respectively; the heating coils being quickly heated up and timely heating up the catalytic carriers indirectly to a catalysis temperature, at the same time of activating the power supply.

6. The active catalytic converter according to claim 5, wherein the isolation supporter is higher than the sum of the heights of the catalytic carriers and the heating coils.
